# EUROPÄISCHE PATENTSCHRIFT

(11) **EP 2 976 367 B1**
(45) Veröffentlichungstag und Bekanntmachung des Hinweises auf die Patenterteilung: **28.04.2021**
(21) Anmeldenummer: 14713756.6
(22) Anmeldetag: 14.03.2014
(51) Int. Cl.: C08F 2/36, C08F 4/38, C08F 255/02, C08F 255/00, C08F 287/00, C09J 151/00, C08F 285/00, C08K 5/134, C08K 5/52

(54) **VERFAHREN ZUR HERSTELLUNG FUNKTIONALISIERTER THERMOPLASTISCHER ELASTOMERE**
METHOD FOR THE PREPARATION OF FUNCTIONALISED THERMOPLASTIC ELASTOMERS
PROCÉDÉ DE FABRICATION D´UN ÉLASTOMÈRE THERMOPLASTIQUE FONCTIONNALISÉ

(30) Priorität: 20.03.2013 EP 13001423
(43) Veröffentlichungstag der Anmeldung: 27.01.2016
(73) Patentinhaber: BYK-Chemie GmbH, 46483 Wesel (DE)
(72) Erfinder: BESSER, Klaus Dieter, 06193 Petersberg OT Gutenberg (DE); GERECKE, Jochen, 06122 Halle (Saale) (DE); LEITNER, Bianka, 06258 Schkopau (DE); RAPTHEL, Inno, 06120 Halle (Saalle) (DE)
(74) Vertreter: Fischer, Volker
(86) Internationale Anmeldenummer: PCT/EP2014/000704
(87) Internationale Veröffentlichungsnummer: WO 2014/146773

(56) Entgegenhaltungen:
- WO-A2-2009/033465
- DE-A1- 19 914 146
- DE-A1-102007 030 801
- DE-C1- 19 607 430

## Beschreibung

Die Erfindung betrifft ein Verfahren zur Herstellung funktionalisierter thermoplastischer Elastomere auf Basis von Pfropfsubstraten, ausgewählt unter
- Olefin-Blockcopolymeren der Zusammensetzung 80 bis 98 Masse-% Ethylen-/2 bis 20 Masse-% C₃- bis C₁₂-Olefineinheiten oder
- teilkristallinen Propylen/Ethylen- und/oder C₄- bis C₁₂-Olefin- und/oder C₄-bis C₁₂-Dien-Copolymeren der Zusammensetzung 50 bis 98 Masse-% Propylen-/2 bis 50 Masse-% C₂- und/oder C₄- bis C₁₂- Olefin- und/oder C₄- bis C₁₂-Dieneinheiten oder
- vernetzten Styrol/Olefin/Styrol- oder Styrol/Olefin-Blockcopolymeren.

Für zahlreiche Anwendungen, insbesondere als Verträglichkeitsbeziehungsweise Haftvermittler (Klebemittel), erfolgt der Einsatz von carboxylierten Olefinpolymeren auf Basis von Polyethylenen unterschiedlicher Dichte (LDPE, MDPE, HDPE), Ethylen/α, β-ethylenisch ungesättigten C₃- bis C₁₂-Olefin-Copolymeren (LLDPE, POE) oder auch von Propylenhomo-(HPP)-sowie C₂- und/oder C₄- bis C₁₂-Olefineinheiten enthaltenden statistischen (Random-) und heterophasigen *(impact)* Propylencopolymeren (RCP, HCP), Ethylen/Propylen-Copolymeren (EPM) oder Ethylen/Propylen/Dien-Terpolymeren (EPDM). Die genannten Polymere werden im Allgemeinen mittels reaktiver Extrusion bei hohen Temperaturen (150 bis 300 °C) durch Pfropfung einer α, β -ethylenisch ungesättigten Mono- oder Dicarbonsäure beziehungsweise deren Anhydrid, insbesondere Methacrylsäure, Fumarsäure und bevorzugt Maleinsäureanhydrid (MSA), auf das olefinische Rückgratpolymer in Gegenwart eines freie Radikale bildenden peroxidischen Initiators hergestellt.

Der oben genannte beschriebene Stand der Technik findet sich unter anderem in der WO 91/18053 A1**,** der US 4,174,358 A**,** der US 4,537,929 A**,** der US 4,684,576 A**,** der US 4,751,270 A**,** der US 4,927,888 A**,** der EP 0 266 221 B1**,** der EP 0 287 140 B1**,** der EP 0 403 109 A2**,** der EP 0 467 178 B1**,** der EP 0 581 360 B1**,** der EP 0 696 303 B1**,** der EP 0 878 510 B1, der US 6,884,850 B2**,** der US 2006/0211825 A1 sowie der WO 2008/079784 A2.

Auf die gleiche Weise werden durch Pfropfung α, β-ethylenisch ungesättigter hydroxyl-, epoxy-, amino-, imido-, silangruppenhaltiger und andere funktionelle Gruppen besitzender Verbindungen die entsprechenden funktionalisierten Olefinpolymere erhalten.

Dabei werden zunehmend hocheffektive, aus überwiegend Ethylen- und/oder Propyleneinheiten mittels spezieller Metallocen-Katalysatorsysteme erzeugte unvernetzte olefinische Elastomere oder überwiegend isotaktische Propylensequenzen und zirka 8 bis 32 Mol-% Ethyleneinheiten enthaltende Randomcopolymere als Rückgratpolymere für die Funktionalisierung mittels Pfropfung von funktionelle Gruppen besitzenden Monomeren (Funktionsmonomeren) verwendet. Zu den unvernetzten olefinischen Elastomeren zählen besonders Ethylen-α-Olefin-Blockcopolymere, beispielsweise die Infuse™-Typen der Dow Chemical Company. Beispiele für die zirka 8 bis 32 Mol-% Ethyleneinheiten enthaltenden Randomcopolymere sind die in den Druckschriften US 6,884,850 B2**,** US 2005/0176888 A1**,** US 2006/0199930 A1 und US 2006/0211825 A1 beschriebenen Vistamaxx™-Typen der ExxonMobil Chemical Company oder die Versify™-Typen von Dow sowie Notio™-Typen. Die genannten Typen der Ethylen-α-Olefin-Blockcopolymere und der Randomcopolymere der Firma Dow Chemical Company sind in den Druckschriften US 2006/0199914 A1, WO 2006/102016 A2 und WO 2008/080111 A1 beschrieben. Zu den verwendeten funktionellen Gruppen zählen unter anderem Carboxylbeziehungsweise Anhydrid-, aber auch Hydroxyl- oder Epoxy-, Amino-, Imidooder Silangruppen. Als funktionelle Gruppen besitzende Monomere kommen besonders häufig α, β-ethylenisch ungesättigte Mono- oder Dicarbonsäuren beziehungsweise ihre Anhydride (Carboxylmonomere), beispielsweise Maleinsäureanhydrid, zum Einsatz.

Die bei niedrigen Reaktionstemperaturen, das heißt unterhalb des Schmelzbeziehungsweise Erweichungspunktes des olefinischen Rückgratpolymers (Pfropfsubstrats) durchgeführte Pfropfcarboxylierung beziehungsweise Pfropfmaleinierung in einem Lösemittel ist auf Grund der technologisch sehr aufwendigen Polymer-Auflösung und vor allem auf Grund der nach erfolgter Pfropfreaktion notwendigen Lösemittelabtrennung und Lösemittelrückgewinnung sowie der erforderlichen Pfropfprodukt-Reinigung keine wirtschaftliche Alternative zur Schmelze-Pfropfung von Säure(anhydrid)oder anderen Funktionsmonomeren auf aus überwiegend olefinischen Einheiten bestehenden Pfropfsubstraten. Dagegen basiert die in fest-fluider Polymerphase durchgeführte Funktionalisierung von Olefinpolymeren, insbesondere eine Carboxylierung beziehungsweise Maleinierung, auf einer unterhalb der Schmelz- beziehungsweise Erweichungstemperatur des Pfropfsubstrates durchgeführten wirtschaftlichen Technologie. Diese ist aus den Druckschriften DD 275 160 A3**,** DD 275 161 A3**,** DD 300 977 A7**,** DE 41 23 972 A1**,** DE 43 42 605 A1**,** EP 0 469 693 B1 und EP 0 370 753 B1 bekannt.

Geeignete Rückgratpolymere für diese in der Festphase durchgeführte Pfropffunktionalisierung *(solid state grafting)* sind teilkristalline Olefinpolymere, die in der sich zwischen ihrem Glas- und Schmelzpunkt ausbildenden amorphen Phase hohe Diffusionsgeschwindigkeiten für niedermolekulare Verbindungen ermöglichen, wobei zu den niedermolekularen Verbindungen ungesättigte Carbonsäuren beziehungsweise Anhydride zählen. Hohe Diffusionsgeschwindigkeiten für niedermolekulare Verbindungen sind eine der Voraussetzungen für hohe Pfropfpolymerisationsgeschwindigkeiten.

Amorphe sowie niedrig-kristalline Olefinelastomere mit spezieller Morphologie, insbesondere elastomere Olefinsegmente enthaltende Styrol/selektiv hydrierte Dien/(Styrol)-Multiblockcopolymere, sind als Polymerrückgrat für die freie radikalische Festphasen-Pfropfmodifizierung unter bestimmten Polymerisationsbedingungen auch einsetzbar, vergleiche Druckschriften EP 0 642 538 B1**,** EP 0 805 827 B1 und WO 2004/048426 A2**,** ohne aber die für die Verwendung als hochwirksame Adhesive, einschließlich Haftvermittler für anspruchsvolle Metall/Kunststoff- und andere Mehrschichtverbunde, erforderlichen Eigenschaften zu erreichen.

Zu den häufig verwendeten Haftvermittlern zählen neben carboxylierten beziehungsweise maleinierten Polyethylenen mit hoher Dichte, mit der Abkürzung HDPE, oder carboxylierten verzweigten Polyethylenen mit niedriger Dichte, mit der Abkürzung LDPE, vor allem auch carboxylierte lineare Ethylencopolymere mit niedriger Dichte, weiterhin aus überwiegend Propyleneinheiten bestehende Random-Propylen/Ethylen-Copolymere und nicht zuletzt auch "elastomere" Olefineinheiten enthaltende Styrol/selektiv hydrierte Diensegment/Styrol- oder Styrol/selektiv hydrierte Diensegment-Blockcopolymere, mit der Abkürzung TPE-S, die zwecks ihrer Carboxylierung, insbesondere Maleinierung, zumeist durch Schmelze-Pfropfung hergestellt, wie unter anderem in den Druckschriften US 5,346,963 A**,** US 6,384,139 B1**,** US 6,331,592 B1**,** US 6,884,850 B2**,** DE 198 41 303 A1**,** WO 01/92357 A1**,** WO 98/42760 A1**,** EP 0 659 784 B1**,** US 4,578,829 A**,** EP 0 173 380 A1**,** EP 0 085 115 B1**,** EP 0 371 001 B1 und EP 0 642 538 B1 beschrieben, und als Klebemittel für verschiedene Einsatzfälle, wie aus den Druckschriften EP 0 696 303 B1**,** EP 0 754 731 B1 und EP 0 878 510 B1 bekannt ist, verwendet werden können. Die carboxylierten linearen Ethylencopolymere weisen entweder einen niedrigen C₃- bis C₁₂-Olefin-Comonomeranteil unterhalb 15 Masse-%, das heißt LLDPE, oder einen höheren C₃- bis C₁₂-Olefin-Comonomeranteil oberhalb 15 Masse-%, bezeichnet mit der Abkürzung POE, auf. Zu carboxylierten linearen Ethylencopolymeren zählen beispielsweise spezielle Ethylen/Octen(C₈)-Copolymere, mit der Abkürzung EOC.

Darüber hinaus sind Klebharzmassen unter Verwendung von in der Schmelze pfropfcarboxylierten Gemischen aus einem kristallinen Polyolefin, zum Beispiel HDPE oder LLDPE, und einem amorphen oder gering kristallinem Olefincopolymer, zum Beispiel Ethylen/Propylen-Kautschuk mit der Abkürzung EPM, bekannt, wie in der Druckschrift EP 0 501 762 B1 beschrieben ist.

Ein Nachteil der bekannten schmelzgepfropften olefinischen thermoplastischen Elastomere besteht in ihren niedrigen Anteilen an gebundenen funktionellen Gruppen. Es liegt ein geringer gepfropter Funktionsmonomerenanteil vor, das heißt ein niedriger Funktionalisierungsgrad. Ein weiterer Nachteil besteht in den technisch/technologisch und kostenmäßig aufwendigen Maßnahmen für die Entfernung von den hohen Restmonomeranteilen aus der Schmelze.

Aus der DE 199 14 146 A1 ist ein Verfahren zur Herstellung funktionalisierter Polypropylene mittels radikalischer Pfropfreaktion niedermolekularer, funktionelle Gruppen besitzender Verbindungen mit Polypropylen unter Festphasenreaktionsbedingungen bekannt. In diesem Verfahren wird die Pfropfung von funktionelle Gruppen besitzenden Verbindungen auf Polypropylen unter kontinuierlicher Zuführung der Reaktionskomponenten sowie unter kontinuierlichem Austrag des Reaktionsproduktes im Temperaturbereich zwischen 80 und 160 °C durchgeführt. Das Verfahren dient unter anderem dazu, die Haftung von Polypropylen gegenüber mineralischen Verstärkungsmaterialien zu verbessern.

Die DE 10 2007 030 801 A1 beschreibt thermoplastisch verarbeitbare carboxylierte Styrol-Olefin-Blockcopolymer/Polyolefin-Kompositionen mit einer Schmelzvolumenrate von MVR (230°C/5 kg) zwischen 1 und 300 cm³/10 min sowie einem auf die gesamte Polymermasse bezogenen Anteil an gepfropfter α, β- olefinisch ungesättigter Mono- und/oder Dicarbonsäure und/oder deren Anhydrid zwischen 0,3 und 5 Masse-%. Die thermoplastisch verarbeitbaren carboxylierten Styrol-Olefin-Blockcopolymer/Polyolefin-Kompositionen sind als Haftvermittler in Beschichtungen auf unterschiedlichen Oberflächen, in Laminaten und Verbunden verwendbar.

In der DE 196 07 430 C1 ist ein kontinuierliches Verfahren zur Modifizierung von Polyolefinen in der festen Phase beschrieben. Die modifizierten Polyolefine, zum Beispiel styrenmodifiziertes Polypropylen, lassen sich durch ein kontinuierliches Verfahren, bei dem eine Sorption von ungesättigten Monomeren und thermisch zerfallenden Radikalbildnern aus der Gasphase durch Polyolefinpartikel erfolgt, und bei dem die Polyolefinpartikel, in denen die thermisch zerfallenden Radikalbildner und ungesättigten Monomere sorbiert sind, einem Hochfrequenzfeld einer Frequenz von 2,4 bis 2,5 GHz ausgesetzt werden, herstellen. Die modifizierten Polyolefine sind zur Herstellung von Folien, Platten, Beschichtungen, Rohren, Hohlkörpern, Schaumstoffen und Formstoffen geeignet.

Aus der WO 2009/033465 A2 ist ein Verfahren zur Herstellung carboxylierter Ethylenpolymerblends bekannt. In einer ersten Stufe werden auf 100 Masseteile eines unter Ethylenhomo- und/oder linearen Ethylencopolymeren ausgewählten Etylenpolymers 0,05 bis 15 Masseteile einer α,β-ethylenisch ungesättigten Mono-und/oder Dicarbonsäure bzw. deren Anhydrid oder einer mindestens ein Carboxylmonomer enthaltenden Monomermischung sowie 0,01 bis 10 Masseteile eines radikalischen Initiatorgemischs hinzugefügt und bei Reaktionstemperaturen zwischen 30 bis 120 °C über eine Reaktionszeit zwischen 5 und 120 min pfropfpolymerisiert. In einer zweiten Stufe wird ein Gemisch aus 100 Masseteilen des in der ersten Festphasenstufe erhaltenen modifizierten Ethylenpolymers, 150 bis 4000 Masseteile eines Ethylenpolymers- oder polymerblends sowie 150 bis 4000 Masseteile eines olefinischen Elastomers kontinuierlich einem Reaktionsextruder zugeführt, bei Temperaturen zwischen 160 und 260 °C umgesetzt und das einen Carboxylierungsgrad zwischen 0,05 und 1 Masse-% besitzende pfropfmodifizierte Ethylenpolymerblends kontinuierlich ausgetragen. Diese auf Basis von Ethylenhomo- und/oder linearen Ethylencopolymeren erhaltenen Produkte sind unter anderem als Haftvermittler vorgesehen.

Die Aufgabe der vorliegenden Erfindung besteht darin, unter Vermeidung der oben beschriebenen Nachteile, einen Haftvermittler auf Basis der Funktionalisierung chemisch resistenter Ethylen/α,β-ethylenisch ungesättigte C₃- bis C₁₂-Olefin(Dien)-Elastomere oder Propylen/C₂- und/oder α,β-ethylenisch ungesättigte C₄- bis C₁₂-Olefin(Dien)-Elastomere sowie vernetzter Styrol/Olefin/Styrol- oder Styrol/Olefin-Blockcopolymere (TPES-V), insbesondere vernetzter Styrol-Ethen/Buten-Styrol- oder Styrol-Ethen/(Ethen)/Propen-Styrol-Blockcopolymere, zur Verfügung zu stellen.

Die Aufgabe wird erfindungsgemäß gelöst durch ein Verfahren nach Anspruch 1. Gegenstand der vorliegenden Erfindung ist somit ein Verfahren zur Herstellung funktionalisierter thermoplastischer Elastomere auf Basis von Pfropfsubstraten. Die Pfropfsubstrate werden ausgewählt unter
- Olefin-Blockcopolymeren der Zusammensetzung 80 bis 98 Masse-% Ethylen-/2 bis 20 Masse-% C₃- bis C₁₂-Olefineinheiten oder
- teilkristallinen Propylen/Ethylen- und/oder C₄- bis C₁₂-Olefin- und/oder C₄-bis C₁₂-Dien-Copolymeren der Zusammensetzung 50 bis 98 Masse-% Propylen-/2 bis 50 Masse-% C₂- und/oder C₄- bis C₁₂- Olefin- und/oder C₄-bis C₁₂-Dieneinheiten oder
- vernetzten Styrol/Olefin/Styrol- oder Styrol/Olefin-Blockcopolymeren, insbesondere Styrol-Ethen/Buten-Styrol- oder Styrol-Ethen/(Ethen)/Propen-Styrol-Blockcopolymeren.

Erfindungsgemäß werden bei dem Verfahren in einem Fluidmischreaktor, das heißt in einem temperierbaren Mischer für feinkörnige Stoffe, der ein frei fließendes Pulverbett gewährleistet, auf 100 Masseteile partikuläres Pfropfsubstrat
- 0,1 bis 15 Masseteile mindestens eines Funktionsmonomers aus der Reihe der funktionelle Gruppen enthaltenden α,β-ethytenisch ungesättigten Verbindungen oder 0,1 bis 15 Masseteile (MT) einer mindestens eines dieser Funktionsmonomere enthaltenden Monomermischung sowie
- 0,01 bis 10 Masseteile mindestens eines freie Radikale bildenden Initiators mit einer 1-Stunde-Halbwertzeittemperatur (T_{HWZ/1h}) zwischen 50 und 200 °C hinzugefügt und bei Reaktionstemperaturen zwischen 40 °C und der Schmelzoder Erweichungstemperatur des Pfropfsubstrates über eine Reaktionszeit zwischen 10 und 200 min in fest-fluider Phase polymerisiert, wobei durch eine solche Festphasenfunktionalisierung ein gepfropftes Funktionsmonomer besitzendes Pfropfprodukt entsteht, das als Einsatzkomponente zur Weiterverarbeitung verwendet wird.

Bei Weiterverarbeitung des Pfropfproduktes, das vorteilhaft einen Anteil zwischen 0,05 und 12 Masse-% gepfropftes Funktionsmonomer enthält, werden 100 Masseteile des Festphasenpfropfprodukts, dem zwischen 0,1 und 60 Masseteile mindestens eines Funktionsmonomers oder 0,1 und 60 Masseteile einer mindestens ein Funktionsmonomer enthaltenden Monomermischung sowie zwischen 0,01 und 20 Masseteile mindestens eines freie Radikale bildenden Initiators mit einer 1-Stunde-Halbwertzeittemperatur T_{HWZ/1h} zwischen 80 und 240 °C eingemischt worden sind, zusammen mit 100 bis 4000 Masseteilen eines unmodifizierten olefinischen Elastomers über Dosiervorrichtungen in den Einzugsbereich eines Extruders kontinuierlich zugeführt. Bei Temperaturen oberhalb des Schmelz- oder Erweichungspunktes des olefinischen Elastomers wird die reaktive Extrusion durchgeführt. Am Reaktorende wird ein funktionalisiertes Elastomer, vorteilhaft mit einem Funktionalisierungsgrad zwischen 0,1 und 5 Masse-%, kontinuierlich ausgetragen.

Als eine spezielle Ausführungsform der Erfindung hat sich die Verfahrensvariante herausgestellt, wonach die Festphasenfunktionalisierung von 100 Masseteilen partikulärem Pfropfsubstrat mittels 0,5 bis 15 Masseteilen mindestens eines Funktionsmonomers oder 0,5 bis 15 Masseteilen einer mindestens ein Funktionsmonomer enthaltenden Monomermischung sowie 0,05 bis 10 Masseteilen mindestens eines freie Radikale bildenden Initiators mit einer 1-Stunde-Halbwertzeittemperatur T_{HWZ/1h} zwischen 50 und 200 °C bei Reaktionstemperaturen zwischen 50 °C und der Schmelz- oder Erweichungstemperatur des Pfropfsubstrates über eine Reaktionszeit zwischen 10 und 100 min erfolgt und anschließend ein einen Anteil zwischen 0,1 und 10 Masse-% gepfropftes Funktionsmonomer besitzendes Pfropfprodukt als Einsatzkomponente verwendet wird. Dabei werden 100 Masseteile Festphasenpfropfprodukt, dem zwischen 0,5 und 50 Masseteile mindestens eines Funktionsmonomers oder 0,5 bis 50 Masseteile mindestens einer ein Funktionsmonomer enthaltenden Monomermischung sowie zwischen 0,02 und 15 Masseteile mindestens eines freie Radikale bildenden Initiators mit einer 1-Stunde-Halbwertzeittemperatur T_{HWZ/1h} zwischen 80 und 240 °C eingemischt worden sind, zusammen mit 200 bis 2000 Masseteilen eines unmodifizierten olefinischen Elastomers, vorzugsweise des für die Festphasenfunktionalisierung verwendeten Pfropfsubstrates, über Dosiervorrichtungen in den Einzug eines Reaktionsextruders kontinuierlich zugeführt. Bei Temperaturen zwischen 160 und 300 °C wird die reaktive Extrusion durchgeführt. Am Reaktorende wird ein Elastomer, vorteilhaft mit einem Funktionalisierungsgrad zwischen 0,2 und 4 Masse-%, kontinuierlich ausgetragen.

Als bevorzugte Funktionsmonomere werden Carboxylgruppen enthaltende α,β-ethylenisch ungesättigte Verbindungen und/oder die unter ihren Anhydriden, Mono- beziehungsweise Diestern oder Mono- beziehungsweise Diamiden ausgewählten Derivate verwendet. Ebenso können die Funktionsmonomere aber auch vorteilhaft aus Hydroxyl-, Epoxy-, Amino-, Imido-, Silan- oder andere funktionelle Gruppen enthaltenden α,β-ethylenisch ungesättigten Verbindungen ausgewählt werden.

Von den als Funktionalisierungsagens verwendbaren carboxyl- und anhydridgruppenhaltigen Monomeren, den sogenannten Carboxylmonomeren, sind Maleinsäureanhydrid (MSA) und/oder Acrylsäure (AS) besonders bevorzugt. Sie werden allein oder als Mischung mit einem Comonomer aus der Gruppe der Vinylaromaten, vorzugsweise Styrol, verwendet. Weitere bevorzugt als Funktionsmonomere eingesetzte Verbindungen sind C₁- bis C₁₂-Alkylester der Acryl- oder Methacrylsäure, vorzugsweise Methyl- oder Ethyl- oder Butylacrylat oder Methylmethacrylat, die ebenfalls entweder allein oder als Mischung mit einem Comonomer aus der Gruppe der Vinylaromaten, vorzugsweise Styrol, verwendet werden.

Gemäß einer Ausführungsform der oben beschriebenen Verfahrensvariante werden Zusammensetzungen von 99 bis 20 Masse-% Funktionsmonomer und 1 bis 80 Masse-% Comonomer eingesetzt, vorzugsweise 95 bis 50 Masse-% Maleinsäureanhydrid (MSA) und/oder Acrylsäure (AS) und 5 bis 50 Masse-% Styrol.

Die radikalisch initiierte Pfropfung wird zwecks Erreichung ausreichender Funktionalisierungsgrade sowie einer gleichmäßigen Pfropfung vorteilhaft unter Verwendung eines Radikalbildners oder gegebenenfalls einer aus mindestens zwei verschiedenen Radikalbildnern bestehenden Mischung unter Verwendung organischer Peroxide mit 1-Stunde-Halbwertzeittemperaturen (T_{HWZ/1h}) zwischen 50 und 200 °C beziehungsweise 1-Minute-Halbwertzeittemperaturen (T_{HWZ/1min}) zwischen 85 und 250 °C, gemessen in 0,1 molarer Monochlorbenzol- Lösung, in einer auf die gesamte Pfropfsubstratmenge bezogenen Konzentration zwischen 0,001 und 5 Masse-%, vorzugsweise zwischen 0,02 und 2 Masse-%, durchgeführt.

Ausgewählte Beispiele für verwendbare Radikalbildner sind Dialkylperoxydicarbonate mit einer 1-Stunde-Halbwertzeittemperatur (T_{HWZ/1h}) zwischen 60 und 70 °C, wie Dibutylperoxydicarbonat (DBPOC) und Dicetylperoxydicarbonat (DCPOC) mit einer 1-Stunde-Halbwertzeittemperatur (T_{HWZ/1h}) von 65 °C, Diauroylperoxid (DLPO) mit einer 1-Stunde-Halbwertzeittemperatur (T_{HWZ/1h}) von 80 °C, Dibenzoylperoxid (DBPO) mit einer 1-Stunde-Halbwertzeittemperatur (T_{HWZ/1h}) von 91 °C, tert.-Butylperoxy-2-ethylhexanoat (TBPEH) mit einer 1-Stunde-Halbwertzeittemperatur (T_{HWZ/1h}) von 91 °C, tert.-Butylperoxy-isobutyrat (TBPIB) mit einer 1-Stunde-Halbwertzeittemperatur (T_{HWZ/1h}) von 98 °C, 1,1-Di-(tert.-butylperoxy)-cyclohexan (DTBPC) mit einer 1-Stunde-Halbwertzeittemperatur (T_{HWZ/1h}) von 113 °C, tert.-Butylperbenzoat (TBPB) mit einer 1-Stunde-Halbwertzeittemperatur (T_{HWZ/1h}) von 122 °C, Dicumylperoxid (DCP) mit einer 1-Stunde-Halbwertzeittemperatur (T_{HWZ/1h}) von 132 °C, 2,5-Dimethyl-2,5-di(tert.-butylperoxy)-hexan (DHBP) mit einer 1-Stunde-Halbwertzeittemperatur (T_{HWZ/1h}) von 134 °C, 2,5-Dimethyl-2,5-di(tert.-butylperoxy)hexin-(3) (DYBP) mit einer 1-Stunde-Halbwertzeittemperatur (T_{HWZ/1h}) von 141 °C, Di-tert.-Butylperoxid (TBP) mit einer 1-Stunde-Halbwertzeittemperatur (T_{HWZ/1h}) von 141 °C, Cumolhydroperoxid (CHP) mit einer 1-Stunde-Halbwertzeittemperatur (T_{HWZ/1h}) von 166 °C und tert.-Butyl-hydroperoxid (TBHP) mit einer 1-Stunde-Halbwertzeittemperatur (T_{HWZ/1h}) von 185 °C.

Unter Berücksichtigung der speziellen Verwendung kann dem erfindungsgemäß in der ersten Stufe funktionalisierten olefinischen Elastomer vor der Weiterverarbeitung mindestens ein Additiv, ausgewählt unter den bekannten Antioxidantien und/oder Verarbeitungsstabilisatoren, bekannten Füll-, Verstärkungs-, Flammschutz- und Gleitmitteln, Extenderölen und anderen Zusatzmitteln in den für die jeweiligen Zusätze üblichen Konzentrationen, und mindestens eine Polymer- und/oder Elastomerkomponente mit einem auf die gesamte elastomere Formmasse bezogenen Anteil von 1 bis 90 Masse-% hinzugefügt werden.

Besonders vorteilhaft ist dabei der Einsatz von Verarbeitungsstabilisatoren, wobei im Allgemeinen primäre Antioxidantien auf Basis sterisch gehinderter Phenolverbindungen, mit einem auf 100 Masseteile funktionalisiertes elastomeres Olefincopolymer oder Olefinblockcopolymer bezogenen Anteil von 0,01 bis 5 Masseteilen, vorzugsweise 0,1 bis 2 Masseteilen, hinzugefügt werden. Oft werden Verarbeitungsstabilisatoren auch in Form einer Kombination aus jeweils mindestens einem primären und mindestens einem sekundären Antioxydans, vorzugsweise aus 20 bis 67 Masse-% einer sterisch gehinderten Phenol- und 80 bis 33 Masse-% einer Phosphitverbindung bestehenden Blends, verwendet.

Als besonders geeignete primäre Antioxydantien können die von der Ciba kommerziell angebotenen Typen IRGANOX® 1010 (Pentaerythrityl-tetrakis-[3-(3,5-di-tert.-butyl-4-hydroxyphenyl)-propionat]), IRGANOX® 1330, IRGANOX® 1425 WL und IRGANOX®3114 sowie synergistische IRGANOX®-Blends aus 20 bis 50 Masse-% eines dieser primären Antioxydatien und 50 bis 80 Masse-% des sekundären Antioxydans IRGAFOS® 168 (Tris-(2,4-di-tert.butyl-phenyl)phosphit), wie zum Beispiel die aus 20 Masse-% IRGANOX® 1010 und 80 Masse-% IRGAFOS® 168 angebotene Type IRGANOX® B561, eingesetzt werden.

Bevorzugt können die erfindungsgemäßen funktionalisierten thermoplastischen Elastomere mit einem Funktionalisierungsgrad zwischen 0,1 und 5 Masse-%, vorzugsweise einem Carboxylierungsgrad zwischen 0,2 und 4 Masse-%, als Haftvermittler und/oder Klebemittel für verschiedene Unterlagen oder Multischichtverbunde, vorzugsweise auf und zwischen Kunststoff- und/oder metallischen Oberflächen, verwendet werden.

Weitere Einzelheiten, Merkmale und Vorteile der Erfindung ergeben sich aus der nachfolgenden Beschreibung von Ausführungsbeispielen.

In den Ausführungsbeispielen wird für die Einheit Masseteile die Abkürzung MT verwendet. Folgerichtig erhält die Einheit Masseteile pro Stunde die Abkürzung MT/h.

### Festphasenpfropfung

### Beispiel 1:

In einem temperierbaren, mit einem stufenlos regelbaren Rührer ausgerüsteten Fluidmischreaktor der Firma Reimelt Henschel werden 100 MT pulveriges Ethylen/α-Olefin-Blockcoelastomer vom Typ Infuse D 9007.15 mit einer Dichte von 0,866 g/cm³, einer Schmelzflussrate (MFR) (190 °C/2,16 kg) von 0,5 g/10 min, einer Härte Shore A von 64 und einem mittleren Teilchendurchmesser von 0,36 mm, im Folgenden als OBC-0,5 bezeichnet, zusammen mit 1 MT Dilauroylperoxid, im Folgenden mit der Abkürzung DLPO bezeichnet, und 2,8 MT Maleinsäureanhydrid, im Folgenden mit MSA abgekürzt, bei einer Reaktorinnentemperatur von 20 °C vorgelegt. Danach wird in StickstoffAtmosphäre bei einer Rührgeschwindigkeit von 650 Umdrehungen pro Minute [U/min] unter gleichzeitiger Temperaturerhöhung mit einer Aufheizgeschwindigkeit von 2 °C/min die Reaktionsmischung dispergiert und bei Erreichung der Reaktionsendtemperatur T_{R1} von 90 °C über eine Zeit t_{R1} von 60 min auf T_{R1} gehalten.

Die Festphasenreaktion wird beendet, indem das Reaktionsprodukt in den eine Temperatur von 20 °C aufweisenden Kühlmischer abgelassen wird, aus dem es für die Ermittlung der in **Tabelle 1** angegebenen Kennwerte entnommen wird.

### Beispiele 2 bis 13:

In den folgenden Beispielen wird der Begriff Schmelzflussrate mit MFR abgekürzt und der Begriff Volumenschmelzrate mit MVR abgekürzt.

Entsprechend der in Beispiel 1 beschriebenen Prozessführung werden weitere pfropffunktionalisierte Olefincopolymere beziehungsweise Olefinblockcopolymere unter Verwendung nachfolgender Komponenten hergestellt:
Partikuläre elastomere Pfropfsubstrate:
   *Infuse D 9007.15:* Dichte = 0,866 g/cm³, MFR (190 °C/2,16 kg) = 0,5 g/10 min, Shore A = 64, nachfolgende Bezeichnung OBC-0,5,
   *Infuse D 9817.15:* Dichte = 0,877 g/cm³, MFR (190 °C/ 2,16 kg) = 15 g/10 min, Shore A = 75, nachfolgende Bezeichnung OBC-15,
   *Versify 4000.01:* Dichte = 0,888 g/cm³, MFR (230 °C/2,16) = 25 g/10 min, Shore A: 96
   *Notio PN-3560:* Dichte = 0,866 g/cm³, MFR (230 °C/2,16 kg) = 6 g/10 min, Shore A: 70
   *Septon V 9461:* Dichte 0,863 g/cm³, MVR (320 °C/21,6 kg) = 7,2 cm³/10 min
   *Septon V 9461-Compound (auf 100 MT Septon V 100 MT Prozessöl und 27 MT PP):* MFR (230 °C/10 kg) = 7 g/10 min, Härte Shore A = 61;
   Alle genannten Pfropfsubstrate, mit der Bezeichnung *Infuse* gehören zu der Gruppe der Olefin-Blockcopolymere (OBC) der Zusammensetzung 80 bis 98 Masse-% Ethylen-/2 bis 20 Masse-% C₃- bis C₁₂-Olefineinheiten. Bei den OBC handelt es sich allgemein um Materialien, die durch sich abwechselnde HDPEund POE-Blöcke gekennzeichnet sind. Alle genannten Pfropfsubstrate mit den Bezeichnungen *Versify* und *Notio* gehören zu der Gruppe der teilkristallinen Propylen/Ethylen- und/oder C₄- bis C₁₂-Olefin- und/oder C₄- bis C₁₂-Dien-Copolymere der Zusammensetzung 50 bis 98 Masse-% Propylen-/2 bis 50 Masse-% C₂- und/oder C₄- bis C₁₂-Olefin- und/oder C₄- bis C₁₂-Dieneinheiten. Alle genannten Pfropfsubstrate mit der Bezeichnung *Septon* gehören zu der Gruppe der vernetzten Styrol/Olefin/Styrol- oder Styrol/Olefin-Blockcopolymere.
Pfropfmonomere:
   Maleinsäureanhydrid mit der Abkürzung MSA und Acrylsäure mit der Abkürzung AS, Hydroxyethylacrylat mit der Abkürzung HEA, Methylmethacrylat mit der Abkürzung MMA und Butylacrylat mit der Abkürzung BA sowie Styrol als Comonomer-Zusatz zu den genannten Funktionsmonomeren;
Peroxidische Initiatoren:
   Dilauroylperoxid mit der Abkürzung DLPO, 2,5-Dimethyl-2,5-di(tert.-butylperoxy)hexan mit der Abkürzung DHBP und Dicetylperoxydicarbonat mit der Abkürzung DCPOC, wobei im Folgenden vorrangig die Abkürzungen verwendet werden.

Unter Beibehaltung des gemäß Beispiel 1 angewandten Chargier- und Aufheizregimes sind als wesentliche Parameter die Reaktionsendtemperatur T_{R1}, bei einer Reaktionszeit t_{R1} von 50 bis 60 min und einer Rührgeschwindigkeit zwischen 400 und 700 U/min, sowie die auf 100 MT Olefinelastomer vorgelegten Monomer/Initiator-Anteile entsprechend den in **Tabelle 1** angegebenen Beispielen variiert worden.

**Tabelle 1** enthält die für die Festphasenpfropfung wichtigen Verfahrensparameter:
- Spalte 1: Beispielnummer (Bsp.-Nr.)
- Spalte 2: eingesetztes Olefinelastomer-Pfropfsubstrat, 100 MT
- Spalte 3: Art und Konzentration des verwendeten Initiators in [MT]
- Spalte 4: Monomer(e) mit Konzentrationsangabe in [MT]
- Spalte 5: Reaktionsendtemperaturen T_{R1} in [°C]
- Spalte 6: Volumenschmelzraten, Abkürzung MVR in [cm³/10 min]
- Spalte 7: gepfropfter Monomeranteil, angegeben als Funktionalisierungsgrad FG in Masse-%.

**Tabelle 1**

| Bsp.-Nr. | Elastomer 100 MT | Initiator [MT] | Monomer [MT] | T_{R1} [°C] | MVR [cm³/10 min] | FG [Ma.-%] |
|---|---|---|---|---|---|---|
| 1 | OBC-0,5 | 1,0 DLPO | 2,8 MSA 1,0 Styrol | 92 | 2,2 (190 °C/21,6 kg) | 1,31 |
| 2 | OBC-15 | 1,0 DLPO | 4,0 HEA 1,0 Styrol | 90 | 18 (190 °C/2,16 kg) | 2,51 |
| 3 | OBC-15 | 1,0 DLPO | 6,0 MMA 0,5 BA | 90 | 19 (190 °C/2,16 kg) | 3,3 |
| 4 | OBC-15 | 1,0 DLPO | 2,8 MSA 0,5 Styrol | 88 | 7,5 (190 °C/21,6 kg) | 1,62 |
| 5 | OBC-15 | 1,0 DLPO | 5,0 BA | 90 | 13 (190 °C/2,16 kg) | 3,7 |
| 6 | Versify | 0,5 DLPO | 5,0 AS 1,0 Styrol | 90 | 18 (230 °C/2,16 kg) | 2,75 |
| 7 | Versify | 0,3 DCPOC | 4,5 AS 1,0 MSA 0,5 Styrol | 90 | 13 (230 °C/2,16 kg) | 3,27 |
| 8 | Notio | 1,0 DLPO | 1,9 MSA 0,2 Styrol | 90 | 0,9 (230 °C/2,16 kg) | 0,94 |
| 9 | Notio | 0,7 DLPO | 1,5 MSA 0,5 Styrol | 90 | 1,0 (230 °C/2,16 kg) | 0,77 |
| 10 | Notio | 1,2 DCPOC | 1,5 MSA 0,5 Styrol | 85 | 5,6 (230 °C/5 kg) | 0,84 |
| 11 | Septon V | 1,0 DLPO | 2,1 MSA | 100 | 18 (320 °C/21 kg) | 1,20 |
| 12 | Septon V | 0,14 DHBP | 2,4 MSA | 160 | 23 (320 °C/21 kg) | 1,51 |
| 13 | Septon V-*Compound* | 0,5 DCPOC | 2,4 MSA | 80 | 16 (320 °C/21 kg) | 0,64 |

### Schmelzepfropfung und -compoundierung

Neben der direkten Verwendung der entsprechend den erfindungsgemäßen Beispielen 1 bis 13 funktionalisierten Elastomere wird - als eine vorteilhafte Ausführungsform der erfindungsgemäßen Lösung unter Verwendung einer bestimmten Konzentration an festphasen-funktionalisiertem Produkt und nach Zusatz eines weiteren Anteils an Funktionsmonomer, an Initiator sowie in der Regel auch an Stabilisator - unmodifiziertes olefinisches Elastomer im geschmolzenen Zustand pfropffunktionalisiert.

Bevorzugt ist die reaktive Extrusion, insbesondere die Carboxylierung beziehungsweise Maleinierung in einem Doppelschneckenextruder.

### Beispiel 14:

Das in der ersten Stufe erhaltene pulverige Festphasenprodukt nach Beispielnummer 1, das im Gesamtgemisch mit 81,8 Masse-% enthalten ist und dem 16 Masse-% MSA und 1,2 Masse-% DHBP sowie als Stabilisator 1,0 Masse-% IRGANOX® B561, einem aus 20 Masse-% des primären Antioxydans IRGANOX® 1010 und 80 Masse-% des sekundären Antioxydans IRGAFOS® 168 bestehenden Blend (Hersteller: Ciba), hinzugegeben und dispergiert worden sind, mittels einer Dosierwaage mit einer Zufuhrgeschwindigkeit von 5 MT/h einem Doppelschneckenkneter des Typs ZSK 25 (L = 42 D, Temperaturen im Bereich von 160 bis 240°C, Schneckendrehzahl: 300 U/min) der Firma Werner & Pfleiderer, ausgerüstet mit einer Unterwassergranulierung, Abkürzung UWG, zugeführt. Gleichzeitig werden über eine zweite Waage 95 MT/h granulares OBC D 9000,00 mit dem Kennwert MVR (230 °C/5 kg) = 4 cm³/10 min, nachfolgend als OBC-4 bezeichnet, zudosiert.

Entsprechend dem oben angeführten Masseverhältnis zwischen dem Festphasenpfropfprodukt-Mix und OBC-4 erfolgt die reaktive Extrusion bei einem mittleren Durchsatz von 100 MT/h. Die Massetemperatur T_{M} wird mit 256 °C gemessen. Der aus der Extruderdüse austretende glatte Produktstrang wird mittels UWG abgeschlagen. Nach Trocknung des Granulates werden die in Beispiel 14 aufgeführten folgenden Kennwerte ermittelt:
MVR (230 °C/5 kg) = 5,3 cm³/10 min und Maleinierungsgrad CSₑₓ = 0,84 Masse-%.

### Beispiele 15 bis 20:

Unter Variierung der Rezeptur für die Schmelzepfropfung und -compoundierung, das heißt der Art der Komponenten und ihrer Anteile, sind unter den in Beispiel 14 angegebenen Extrusionsbedingungen, das heißt Temperatur, Schneckendrehzahl und Durchsatz, weitere Schmelzepfropfungen durchgeführt worden, deren Ergebnisse in **Tabelle 2** gezeigt sind.

### In Tabelle 2 sind aufgeführt:

Die Spalte 1 enthält die Nummerierung der Beispiele. Die Spalte 2 beinhaltet die Konzentration an eingesetztem Fastphasenpfropfprodukt mit Angabe der entsprechenden Beispiel-Nummer aus **Tabelle 1,** angegeben in Masseteile pro Stunde [MT/h]. Die Spalte 3 beinhaltet die Art und Konzentration an eingesetztem unmodifizierten olefinischem Elastomer, angegeben in [MT/h]. In Spalte 4 sind die an der ZSK-Düse jeweils gemessenen mittleren Massetemperatur T_{M} in [°C] aufgeführt. In den Spalten 5 bis 7 sind die ermittelten Kennwerte angegeben, wobei Spalte 5 die Schmelzvolumenrate (MVR) (230 °C/5 kg) in [cm³/10 min] sowie die qualitative Strang-Beurteilung, ausgewählt aus den Beurteilungen "glatt", "fast glatt" und "rau", enthält. Die Spalte 6 enthält jeweils eine Angabe über den Funktionalisierungsgrad (CSₑₓ), wobei diese Angabe in Masse-%, kurz [Ma.-%], erfolgt. Die Spalte 7 beinhaltet jeweils eine Information zur Haft- beziehungsweise Schälfestigkeit (peel strength), angegeben in [N/mm].

Der gepfropfte Anteil CSₑₓ an MSA oder AS, das heißt der Funktionalisierungsgrad, auch als Carboxylierungs- oder bei der MSA-Pfropfung als Maleinierungsgrad CSₑₓ bezeichnet, ist mittels Rücktitration der durch den Anteil an Carbonsäure, das heißt an MSA oder AS, nicht neutralisierten Kalilauge wie folgt bestimmt worden:
Nach Behandlung über 6 h bei 80 °C des im siedenden Methanol erhaltenen Rückstandes einer 2 g-Pfropfproduktprobe mit einer Mischung aus 100 ml wassergesättigtem Xylol und 20 ml 0,1-molarer methanolischer Kalilauge erfolgt nach Zugabe einiger Tropfen einer 1%igen methanolischen Phenolphthaleinlösung eine Titration mit 0,1-molarer Salzsäure.

Der gepfropfte Anteil an HEA, BA und MMA - auch als CSₑₓ-Werte in **Tabelle 2** ausgewiesen - ist mittels Near Infrared (NIR)-Analyse ermittelt worden.

Die Schmelzvolumenraten, Abkürzung MVR, sind ebenso wie die Schmelzflussraten, Abkürzung MFR, nach ISO 1133 bestimmt worden.

Darüber hinaus ist in **Tabelle 2** ein Kennwert für die Haftfestigkeit in Form der modifizierten Schälfestigkeit (*peel strength*) als eine für die Bewertung der erfindungsgemäß funktionalisierten thermoplastischen Olefinelastomere maßgebliche Eigenschaft angegeben.

Zum Vergleich sind in **Tabelle** 2 mit den Beispielen 14A, 17A, 18A und 20A vier allein in der Schmelze - ohne Vorlage eines in der Festphase gepfropften Olefinelastomers - hergestellte pfropfcarboxylierte Olefinelastomere mitangeführt, wobei im Unterschied zu den erfindungsgemäßen Beispielen das MSA, der Initiator DHBP sowie auch der Stabilisator IRGANOX®B561 nicht in Form einer Mischung mit dem Festphasen-Pfropfprodukt, sondern in einem Teil des jeweils eingesetzten unmodifizierten Olefinelastomers vorgemischt über die Waage 2 in den Extrudereinzug zugeführt werden. Demnach sind gemäß Beispiel 14A über die erste Waage 95 MT/h reines OBC D9000.00 und über die zweite Waage eine aus 4 MT/h reinem OBC D9000.00, 0,9 MT/h MSA, 0,05 MT/h DHBP und 0,05 MT/h IRGANOX® B561 bestehende Mischung zugeführt worden. Entsprechend ist bei den anderen Vergleichsbeispielen 17A, 18A und 20A verfahren worden.

In den Beispielen, für die in der **Tabelle 2** keine Stabilisatorkonzentrationen mit angeführt sind, sind 0,05 Masse-% IRGANOX® B561 verwendet worden.

**Tabelle 2**

| Bsp. | Extruder-Fahrweise | | | | Kennwerte | | |
|---|---|---|---|---|---|---|---|
| Nr. | Olefinelastomer [MT/h] | Festphasen-Prod.-Tab. 1 [MT/h] | Monomer/ Initiator [MT/h] | T_{M} [°C] | MVR (230/5) [cm³/10'] | CSₑₓ [Ma.-%] | Schälfestigkeit [N/mm] |
| 14 | 95 OBC-4 | 4,09 Nr. 1 | 0,8 MSA 0,05 DHBP | 256 | 5,3 glatt | 0,84 | 6,2 |
| 14A | 99 OBC-4 | - | 0,9 MSA 0,05 DHBP | 258 | 2,3 fast glatt | 0,65 | 4,1 |
| 15 | 92 OBC-15 | 6,544 Nr. 1 | 1,28 MSA 0,096 DHBP 0,08 Stab. | 262 | 14 glatt | 0,92 | 7,0 |
| 16 | 95 OBC-4 | 4,01 Nr. 4 | 0,8 MSA 0,04 DHBP 0,15 Stab | 252 | 4,6 glatt | 0,71 | 6,6 |
| 17 | 95 Versify | 4,09 Nr. 6 | 0,8 MSA 0,05 DHBP | 235 | 29 glatt | 0,87 | 6,3 |
| 17A | 99 Versify | - | 0,9 MSA 0,05 DHBP | 235 | 12 fast glatt | 0,67 | 4,5 |
| 18 | 95 Notio | 4,1 Nr. 8 | 0,8 MSA 0,05 DHBP | 238 | 6,7 glatt | 0,73 | 6,0 |
| 18A | 99 Notio | - | 0,9 MSA 0,05 DHBP | 240 | 2,3 rau | 0,65 | 4,1 |
| 19 | 95 OBC-4 | 4,1 Nr. 2 | 0,8 HEA 0,05 DHBP | 261 | 1,6 glatt | 0,91 | 5,3 |
| 20 | 90 OBC-4 | 8,2 Nr. 5 | 1,6 BA 0,1 DHBP 0,1 Stab | 258 | 1,2 fast glatt | 1,25 | 6,5 |
| 20A | 98 OBC-4 | - | 1,8 BA 0,1 DHBP 0,1 Stab. | 260 | 0,5 rau | 0,95 | 4,8 |

Als Haftfestigkeits-Kennwert ist die in einer Material-Prüfmaschine TC-FR010TH.A5V der Firma Zwick GmbH & Co. an eingespannten Proben aus Aluminiumblechstreifen/0,3 mm Haftvermittler-Folie/Aluminiumblechstreifen-Verbunden (AI/HV/AI) mit einer Zuggeschwindigkeit von 100 mm/min ermittelte Schälfestigkeit verwendet worden.

Die mittels UWG erhaltenen Granulate werden nach ihrer Trocknung zu 0,3 mm dicken Folien extrudiert, in Streifen mit einer Länge von 80 mm und einer Breite von 40 mm geschnitten und zwischen zwei Aluminiumblechstreifen mit gleicher Dimension gelegt. Anschließend erfolgt in einem Wärmeschrank bei 180 °C eine Temperung der AI/HV/AI-Verbunde, die daraufhin nach verschiedenen Lagerzeiten im Wärmeschrank ohne zusätzliche Gewichtsauflage und Druck vermessen werden.

Die Messung wird nach einer Lagerzeit von 8 min an den jeweils in drei geschnittenen AI/HV/AI-Probestreifen von 13,3 x 80 mm durchgeführt. Die in **Tabelle 2** angegebenen Schälfestigkeiten sind die aus jeweils vier AI/HV/AI-Verbunden und somit aus insgesamt 12 Probestreifen-Einzelwerten für eine getestete Probe erhaltenen Durchschnittswerte.

Wie der Vergleich der Pfropfprodukt-Kennwerte in der Gegenüberstellung mit den reinen Schmelzefunktionalisierungsprodukten aus den Beispielen 14A, 17A, 18A und 20A der **Tabelle 2** zeigt, zeichnen sich die erfindungsgemäß hergestellten funktionalisierten Olefinelastomere durch hohe Haftfestigkeiten mit Schälfestigkeiten ≥ 5 N/mm bei gleichzeitig für die Verwendung gut geeigneten Schmelzviskositäten entsprechend MVR (230 °C/5 kg)-Werten zwischen 1 und 30 cm³/10 min aus. Darüber hinaus ist besonders hervorzuheben, dass die hohen Schälfestigkeiten dieser neuen Haftvermittler auch nach längerer Temperung erhalten bleiben.

### LISTE DER VERWENDETEN ABKÜRZUNGEN

- AS: Acrylsäure
- BA: Butylacrylat
- CHP: Cumolhydroperoxid
- CSₑₓ: Maleinierungsgrad, Carboxylierungsgrad, gepfropfter Anteil
- DBPO: Dibenzoylperoxid
- DBPOC: Dibutylperoxydicarbonat
- DCP: Dicumylperoxid
- DCPOC: Dicetylperoxydicarbonat
- DHBP: 2,5-Dimethyl-2,5-di(tert.-butylperoxy)-hexan
- DLPO: Diauroylperoxid
- DTBPC: 1,1-Di-(tert.-butylperoxy)-cyclohexan
- DYBP: 2,5-Dimethyl-2,5-di(tert.-butylperoxy)hexin-(3)
- EOC: Ethylen/Octen(C₈)-Copolymere
- EPM: Ethylen/Propylen-Kautschuk
- FG: Funktionalisierungsgrad
- HDPE: Polyethylenen mit hoher Dichte
- HEA: Hydroxyethylacrylat
- HV: Haftvermittler
- LDPE: Polyethylenen mit niedriger Dichte
- LLDPE: lineare Ethylencopolymere mit einem niedrigen C₃- bis C₁₂-Olefin-Comonomeranteil unterhalb 15 Masse-%
- MFR: Schmelzflussraten
- MMA: Methylmethacrylat
- MSA: Maleinsäureanhydrid
- MT: Masseteile
- MT/h: Masseteile pro Stunde
- MVR: Volumenschmelzraten, Schmelzvolumenraten
- NIR: Near Infrared
- OBC: Olefinblockcopolymer
- POE: lineare Ethylencopolymere mit einem höheren C₃- bis C₁₂-Olefin-Comonomeranteil oberhalb 15 Masse-%
- TBHP: tert.-Butyl-hydroperoxid
- TBP: Di-tert.-Butylperoxid
- TBPB: tert.-Butylperbenzoat
- TBPEH: tert.-Butylperoxy-2-ethylhexanoat
- TBPIB: tert.-Butylperoxy-isobutyrat
- T_{HWZ/1h}: 1-Stunde-Halbwertzeittemperatur
- T_{HWZ/1min}: 1-Minute-Halbwertzeittemperatur
- T_{M}: Massetemperatur
- TPE-S: Styrol/Diensegment/Styrol- oder Styrol/Diensegment-Blockcopolymere
- TPES-V: Styrol/Olefin/Styrol-Blockcopolymere
- T_{R1}: Reaktionsendtemperatur
- t_{R1}: Zeit (für das Halten der Reaktionsendtemperatur T_{R1})
- U/min: Umdrehung pro Minute
- UWG: Unterwassergranulierung

## Patentansprüche

1. Verfahren zur Herstellung funktionalisierter thermoplastischer Elastomere auf Basis von Pfropfsubstraten, ausgewählt unter
- Olefin-Blockcopolymeren der Zusammensetzung 80 bis 98 Masse-% Ethylen-/2 bis 20 Masse-% C₃- bis C₁₂-Olefineinheiten oder
- teilkristallinen Propylen/Ethylen- und/oder C₄- bis C₁₂-Olefin- und/oder C₄-bis C₁₂-Dien-Copolymeren der Zusammensetzung 50 bis 98 Masse-% Propylen-/2 bis 50 Masse-% C₂- und/oder C₄- bis C₁₂-Olefin- und/oder C₄-bis C₁₂-Dieneinheiten oder
- vernetzten Styrol/Olefin/Styrol- oder Styrol/Olefin-Blockcopolymeren,
bei dem in einem Fluidmischreaktor, das heißt in einem temperierbaren Mischer für feinkörnige Stoffe, der ein frei fließendes Pulverbett gewährleistet, auf 100 Masseteile partikuläres Pfropfsubstrat
- 0,1 bis 15 Masseteile mindestens eines Funktionsmonomers aus der Reihe der funktionelle Gruppen enthaltenden α,β-ethylenisch ungesättigten Verbindungen oder 0,1 bis 15 Masseteile einer mindestens eines dieser Funktionsmonomere enthaltenden Monomermischung sowie
- 0,01 bis 10 Masseteile mindestens eines freie Radikale bildenden Initiators mit einer 1-Stunde-Halbwertzeittemperatur (T_{HWZ/1h}) zwischen 50 und 200 °C
hinzugefügt und bei Reaktionstemperaturen zwischen 40 °C und der Schmelz- oder Erweichungstemperatur des Pfropfsubstrates über eine Reaktionszeit zwischen 10 und 200 min in fest-fluider Phase polymerisiert werden, wobei durch eine solche Festphasenfunktionalisierung ein gepfropftes Funktionsmonomer besitzendes Pfropfprodukt entsteht, das als Einsatzkomponente zur Weiterverarbeitung verwendet wird, **dadurch gekennzeichnet, dass** bei Weiterverarbeitung des Pfropfproduktes
- 100 Masseteile Festphasenpfropfprodukt, dem zwischen 0,1 und 60 Masseteile mindestens eines Funktionsmonomers oder einer mindestens ein Funktionsmonomer enthaltenden Monomermischung sowie zwischen 0,01 und 20 Masseteile mindestens eines freie Radikale bildenden Initiators mit einer 1-Stunde-Halbwertzeittemperatur (T_{HWZ/1h}) zwischen 80 und 240 °C eingemischt worden sind, zusammen mit 100 bis 4000 Masseteilen eines unmodifizierten olefinischen Elastomers über Dosiervorrichtungen in den Einzugsbereich eines Extruders kontinuierlich zugeführt werden,
- bei Temperaturen oberhalb des Schmelz- oder Erweichungspunktes des olefinischen Elastomers die reaktive Extrusion durchgeführt und
- am Reaktorende ein funktionalisiertes Elastomer kontinuierlich ausgetragen wird.

2. Verfahren nach Anspruch 1, **dadurch gekennzeichnet, dass** die Festphasenfunktionalisierung von 100 Masseteilen partikulärem Pfropfsubstrat mittels 0,5 bis 15 Masseteilen mindestens eines Funktionsmonomers oder einer mindestens ein Funktionsmonomer enthaltenden Monomermischung sowie 0,05 bis 10 Masseteilen mindestens eines freie Radikale bildenden Initiators mit einer 1-Stunde-Halbwertzeittemperatur (T_{HWZ/1h}) zwischen 50 und 200 °C bei Reaktionstemperaturen zwischen 50 °C und der Schmelz- oder Erweichungstemperatur des Pfropfsubstrates über eine Reaktionszeit zwischen 10 und 100 min erfolgt und anschließend ein einen Anteil zwischen 0,1 und 10 Masse-% gepfropftes Funktionsmonomer besitzendes Pfropfprodukt als Einsatzkomponente verwendet wird, indem 100 Masseteile Festphasenpfropfprodukt, dem zwischen 0,5 und 50 Masseteile mindestens eines Funktionsmonomers oder mindestens einer ein Funktionsmonomer enthaltenden Monomermischung sowie zwischen 0,02 und 15 Masseteile mindestens eines freie Radikale bildenden Initiators mit einer 1-Stunde-Halbwertzeittemperatur (T_{HWZ/1h}) zwischen 80 und 240 °C eingemischt worden sind, zusammen mit 200 bis 2000 Masseteilen eines unmodifizierten olefinischen Elastomers über Dosiervorrichtungen in den Einzug eines Reaktionsextruders kontinuierlich zugeführt werden, bei Temperaturen zwischen 160 und 300 °C die reaktive Extrusion durchgeführt und am Reaktorende ein Elastomer kontinuierlich ausgetragen wird.

3. Verfahren nach Anspruch 1 oder 2, **dadurch gekennzeichnet, dass** als Funktionsmonomere Carboxylgruppen enthaltende α,β-ethylenisch ungesättigte Verbindungen und/oder die unter ihren Anhydriden und/oder Mono- oder Diestern und/oder Mono- oder Diamiden ausgewählten Derivate verwendet werden.

4. Verfahren nach Anspruch 1 oder 2, **dadurch gekennzeichnet, dass** die Funktionsmonomere α,β-ethylenisch ungesättigte Verbindungen sind, die als funktionelle Gruppen Hydroxyl-, Epoxy-, Amino-, Imido- oder Silangruppen enthalten.

5. Verfahren nach Anspruch 3, **dadurch gekennzeichnet, dass** als Funktionsmonomere Maleinsäureanhydrid (MSA) und/oder Acrylsäure (AS) allein oder als Mischung mit einem Comonomer aus der Gruppe der Vinylaromaten verwendet werden.

6. Verfahren nach Anspruch 3, **dadurch gekennzeichnet, dass** als Funktionsmonomere die C₁- bis C₁₂-Alkylester der Acryl- oder Methacrylsäure allein oder als Mischung mit einem Comonomer aus der Gruppe der Vinylaromaten verwendet werden.

7. Verfahren nach Anspruch 5 oder 6, **dadurch gekennzeichnet, dass** Zusammensetzungen von 99 bis 20 Masse-% Funktionsmonomer und 1 bis 80 Masse-% Comonomer eingesetzt werden.

8. Verfahren nach einem der Ansprüche 1 bis 7, **dadurch gekennzeichnet, dass** die radikalisch initiierte Pfropfung unter Verwendung eines Radikalbildners oder einer aus mindestens zwei verschiedenen Radikalbildnern bestehenden Mischung unter Verwendung organischer Peroxide mit 1-Stunde-Halbwertzeittemperatur (T_{HWZ/1h}) zwischen 50 und 200 °C oder 1-Minute-Halbwertzeittemperatur (T_{HWZ/1min}) zwischen 85 und 250 °C in einer auf die gesamte Pfropfsubstratmenge bezogenen Konzentration zwischen 0,001 und 5 Masse-% durchgeführt wird.

9. Verfahren nach Anspruch 8, **dadurch gekennzeichnet, dass** als Radikalbildner Dialkylperoxydicarbonate mit einer 1-Stunde-Halbwertzeittemperatur (T_{HWZ/1h}) zwischen 60 und 70 °C, Diauroylperoxid (DLPO) mit einer 1-Stunde-Halbwertzeittemperatur (T_{HWZ/1h}) von 80 °C, Dibenzoylperoxid (DBPO) mit einer 1-Stunde-Halbwertzeittemperatur (T_{HWZ/1h}) von 91 °C, tert.-Butylperoxy-2-ethylhexanoat (TBPEH) mit einer 1-Stunde-Halbwertzeittemperatur (T_{HWZ/1h}) von 91 °C, tert.-Butylperoxy-isobutyrat (TBPIB) mit einer 1-Stunde-Halbwertzeittemperatur (T_{HWZ/1h}) von 98 °C, 1,1-Di-(tert.-butylperoxy)-cyclohexan (DTBPC) mit einer 1-Stunde-Halbwertzeittemperatur (T_{HWZ/1h}) von 113 °C, tert.-Butylperbenzoat (TBPB) mit einer 1-Stunde-Halbwertzeittemperatur (T_{HWZ/1h}) von 122 °C, Dicumylperoxid (DCP) mit einer 1-Stunde-Halbwertzeittemperatur (T_{HWZ/1h}) von 132 °C, 2,5-Dimethyl-2,5-di(tert.-butylperoxy)-hexan (DHBP) mit einer 1-Stunde-Halbwertzeittemperatur (T_{HWZ/1h}) von 134 °C, 2,5-Dimethyl-2,5-di(tert.-butylperoxy)hexin-(3) (DYBP) mit einer 1-Stunde-Halbwertzeittemperatur (T_{HWZ/1h}) von 141 °C, Di-tert.-butylperoxid (TBP) mit einer 1-Stunde-Halbwertzeittemperatur (T_{HWZ/1h}) von 141 °C, Cumolhydroperoxid (CHP) mit einer 1-Stunde-Halbwertzeittemperatur (T_{HWZ/1h}) von 166 °C und tert.-Butyl-hydroperoxid (TBHP) mit einer 1-Stunde-Halbwertzeittemperatur (T_{HWZ/1h}) von 185 °C verwendbar sind.

10. Verfahren nach einem der Ansprüche 1 bis 9, **dadurch gekennzeichnet, dass** dem funktionalisierten olefinischen Elastomer mindestens ein Additiv, ausgewählt unter Antioxidantien und/oder Verarbeitungsstabilisatoren, Füll-, Verstärkungs-, Flammschutz- und Gleitmitteln sowie Extenderölen in den für die jeweiligen Zusätze üblichen Konzentrationen, und mindestens eine Polymer- und/oder Elastomerkomponente mit einem auf die gesamte elastomere Formmasse bezogenen Anteil von 1 bis 90 Masse-% hinzugefügt werden.

11. Verfahren nach Anspruch 10, **dadurch gekennzeichnet, dass** als Verarbeitungsstabilisatoren primäre Antioxidantien auf Basis sterisch gehinderter Phenolverbindungen, mit einem auf 100 Masseteile funktionalisiertes elastomeres Olefincopolymer oder Olefinblockcopolymer bezogenen Anteil von 0,01 bis 5 Masseteilen hinzugefügt werden.

12. Verfahren nach Anspruch 10, **dadurch gekennzeichnet, dass** Verarbeitungsstabilisatoren in Form einer Kombination aus jeweils mindestens einem primären und mindestens einem sekundären Antioxydans verwendet werden.

## Claims

1. Process for the production of functionalized thermoplastic elastomers based on graft substrates, selected among
- olefin block copolymers of the composition 80 to 98% by mass of ethylene units/2 to 20% by mass of C₃-C₁₂-olefin units or
- among semicrystalline propylene/ethylene copolymers and/or C₄- to C₁₂-olefin copolymers and/or C₄- to C₁₂-diene copolymers in each case of the composition 50 to 98% by mass of propylene units/2 to 50% by mass of C₂- and/or C₄- to C₁₂-olefin units and/or C₄- to C₁₂-diene units or
- among crosslinked styrene/olefin/styrene block copolymers or styrene/olefin block copolymers,
in which the following are added in a fluid mixing reactor, i.e. in a temperature-controllable mixer for fine-grained substances which ensures a freeflowing powder bed, for each 100 parts by mass of particulate graft substrate:
- 0.1 to 15 parts by mass of at least one functional monomer from the group of the α,β-ethylenically unsaturated compounds comprising functional groups or 0.1 to 15 parts by mass of a monomer mixture comprising at least one of these functional monomers, and also
- 0.01 to 10 parts by mass of at least one free-radical-generating initiator with a 1-hour-half-life temperature (T_{HL/1h}) between 50 and 200°C
are added and are polymerized at reaction temperatures between 40°C and the melting or softening point of the graft substrate over a reaction time between 10 and 200 min in solid-fluid phase, where this solid-phase functionalization produces graft product which comprises a grafted functional monomer and which is used as starting component for further processing, **characterized in that** during further processing of the graft product
- 100 parts by mass of solid-phase graft product into which between 0.1 and 60 parts by mass of at least one functional monomer or of a monomer mixture comprising at least one functional monomer, and also between 0.01 and 20 parts by mass of at least one free-radical-generating initiator with a 1-hour-half-life temperature (T_{HL/1h}) between 80 and 240°C have been mixed are continuously introduced by way of metering devices, together with 100 to 4000 parts by mass of an unmodified olefinic elastomer, into the intake region of an extruder,
- the reactive extrusion is carried out at temperatures above the melting or softening point of the olefinic elastomer and
- a functionalized elastomer is continuously discharged at the end of the reactor.

2. Process according to Claim 1, **characterized in that** the solid-phase functionalization of 100 parts by mass of particulate graft substrate is achieved by means of 0.5 to 15 parts by mass of at least one functional monomer or of a monomer mixture comprising at least one functional monomer, and also 0.05 to 10 parts by mass of at least one free-radical-generating initiator with a 1-hour-half-life temperature (T_{HL/1h}) between 50 and 200°C at reaction temperatures between 50°C and the melting or softening point of the graft substrate over a reaction time between 10 and 100 min, and then a graft product which comprises a proportion of between 0.1 and 10% by mass of grafted functional monomer is used as starting component, **in that** 100 parts by mass of solid-phase graft product to which between 0.5 and 50 parts by mass of at least one functional monomer or of at least one monomer mixture comprising a functional monomer, and also between 0.02 and 15 parts by mass of at least one free-radical-generating initiator with a 1-hour-half-life temperature (T_{HL/1h}) between 80 and 240°C have been mixed, are continuously introduced by way of metering devices, together with 200 to 2000 parts by mass of an unmodified olefinic elastomer, into the intake of a reaction extruder, the reactive extrusion is carried out at temperatures between 160 and 300°C and an elastomer is continuously discharged at the end of the reactor.

3. Process according to Claim 1 or 2, **characterized in that** functional monomers used are α,β-ethylenically unsaturated compounds comprising carboxyl groups and/or the derivatives selected among their anhydrides and/or mono- or diesters and/or mono- or diamides.

4. Process according to Claim 1 or 2, **characterized in that** the functional monomers are α,β-ethylenically unsaturated compounds which comprise, as functional groups, hydroxy, epoxy, amino, imido or silane groups.

5. Process according to Claim 3, **characterized in that** functional monomers used are maleic anhydride (MA) and/or acrylic acid (AA) alone or as mixture with a comonomer from the group of the vinyl aromatics.

6. Process according to Claim 3, **characterized in that** functional monomers used are the C₁- to C₁₂-alkyl esters of acrylic or methacrylic acid alone or as mixture with a comonomer from the group of the vinyl aromatics.

7. Process according to Claim 5 or 6, **characterized in that** compositions of 99 to 20% by mass of functional monomer and 1 to 80% by mass of comonomer are used.

8. Process according to any of Claims 1 to 7, **characterized in that** the free-radical-initiated grafting is carried out with use of a free-radical generator or of a mixture consisting of at least two different free-radical generators with use of organic peroxides with 1-hour-half-life temperature (T_{HL/1h}) between 50 and 200°C or 1-minute-half-life temperature (T_{HL/1min}) between 85 and 250°C in a concentration between 0.001 and 5% by mass, based on the entire quantity of graft substrates.

9. Process according to Claim 8, **characterized in that** free-radical generators that can be used are dialkyl peroxydicarbonates with a 1-hour-half-life temperature (T_{HL/1h}) between 60 and 70°C, dilauroyl peroxide (DLPO) with a 1-hour-half-life temperature (T_{HL/1h}) of 80°C, dibenzoyl peroxide (DBPO) with a 1-hour-half-life temperature (T_{HL/1h}) of 91°C, tert-butyl peroxy-2-ethylhexanoate (TBPEH) with a 1-hour-half-life temperature (T_{HL/1h}) of 91°C, tert-butyl peroxyisobutyrate (TBPIB) with a 1-hour-half-life temperature (T_{HL/1h}) of 98°C, 1,1-di-(tert-butylperoxy)cyclohexane (DTBPC) with a 1-hour-half-life temperature (T_{HL/1h}) of 113°C, tert-butyl perbenzoate (TBPB) with a 1-hour-half-life temperature (T_{HL/1h}) of 122°C, dicumyl peroxide (DCP) with a 1-hour-half-life temperature (T_{HL/1h}) of 132°C, 2,5-dimethyl-2,5-di)tert-butylperoxy)hexane (DHBP) with a 1-hour-half-life temperature (T_{HL/1h}) of 134°C, 2,5-dimethyl-2,5-di(tert-butylperoxy)-3-hexyne (DYBP) with a 1-hour-half-life temperature (T_{HL/1h}) of 141°C, di-tert-butyl peroxide (TBP) with a 1-hour-half-life temperature (T_{HL/1h}) of 141°C, cumene hydroperoxide (CHP) with a 1-hour-half-life temperature (T_{HL/1h}) of 166°C and tert-butyl hydroperoxide (TBHP) with a 1-hour-half-life temperature (T_{HL/1h}) of 185°C.

10. Process according to any of Claims 1 to 9, **characterized in that** the following are added to the functionalized olefinic elastomer: at least one additive, selected among antioxidants and/or processing stabilizers, fillers, reinforcing agents, flame retardants and lubricants or else among extender oils, in the concentrations usual for the respective additions, and at least one polymer component and/or elastomer component in each case in a proportion of 1 to 90% by mass, based on the entire elastomeric moulding composition.

11. Process according to Claim 10, **characterized in that** processing stabilizers added are, in a proportion of 0.01 to 5 parts by mass, based on 100 parts by mass of functionalized elastomeric olefin copolymer or olefin block copolymer, primary antioxidants based on sterically hindered phenol compounds.

12. Process according to Claim 10, **characterized in that** processing stabilizers used take the form of a combination of respectively at least one primary and at lest one secondary antioxidant.

## Revendications

1. Procédé pour la préparation d'élastomères thermoplastiques fonctionnalisés à base de substrats greffés, choisis parmi
- des copolymères à blocs d'oléfine composés de 80 à 98 % en masse de motifs de type éthylène/2 à 20 % en masse de motifs de type oléfine en C₃₋₁₂ et
- des copolymères partiellement cristallins de propylène/éthylène et/ou oléfine en C₄₋₁₂ et/ou diène en C₄₋₁₂ composés de 50 à 98 % en masse de motifs de type propylène/2 à 50 % en masse de motifs de type oléfine en C₂ et/ou de type oléfine en C₄₋₁₂ et/ou de motifs de type diène en C₄₋₁₂ et
- des copolymères à bloc réticulés de type styrène/oléfine/styrène ou styrène/oléfine,
dans lequel, dans un réacteur de mélange de fluides, c'est-à-dire dans un mélangeur réglable en température pour matières à grains fins, qui garantit un lit de poudre s'écoulant librement, par 100 parties en masse de substrat greffé particulaire
- 0,1 à 15 parties en masse d'au moins un monomère fonctionnel de la série des composés éthyléniquement α,β-insaturés contenant des groupes fonctionnels ou 0,1 à 15 parties en masse d'un mélange de monomère contenant au moins un de ces monomères fonctionnels ainsi que
- 0,01 à 10 parties en masse d'au moins un initiateur de formation de radicaux libres doté d'une température de demi-vie d'1 heure (T_{HWZ/1h}) comprise entre 50 et 200 °C
sont ajoutées et sont polymérisées à des températures de réaction comprises entre 40 °C et la température de fusion ou de ramollissement du substrat greffé pendant un temps de réaction compris entre 10 et 200 min en phase solide-fluide, dans lequel, par une telle fonctionnalisation en phase solide, un produit greffé possédant un monomère fonctionnel greffé est produit, qui est utilisé pour un traitement ultérieur en tant que composant utilisé, **caractérisé en ce que** lors du traitement ultérieur du produit greffé
- 100 parties en masse du produit greffé en phase solide, auquel ont été mélangées entre 0,1 et 60 parties en masse d'au moins un monomère fonctionnel ou d'un mélange de monomères contenant au moins un monomère fonctionnel ainsi qu'entre 0,01 et 20 parties en masse d'au moins un initiateur de formation de radicaux libres doté d'une température de demi-vie d'1 heure (T_{HWZ/1h}) comprise entre 80 et 240 °C, sont introduites de manière continue ensemble avec 100 à 4 000 parties en masse d'un élastomère oléfinique non modifié, par l'intermédiaire de dispositifs de dosage dans la zone d'introduction d'une extrudeuse,
- l'extrusion réactive est mise en œuvre à des températures supérieures au point de fusion ou de ramollissement de l'élastomère oléfinique et
- un élastomère fonctionnalisé est déchargé en continu au niveau de l'extrémité du réacteur.

2. Procédé selon la revendication 1, **caractérisé en ce que** la fonctionnalisation en phase solide de 100 parties en masse de substrat greffé particulaire est réalisée au moyen de 0,5 à 15 parties en masse d'au moins un monomère fonctionnel ou d'un mélange de monomères contenant au moins un monomère fonctionnel ainsi que de 0,05 à 10 parties en masse d'au moins un initiateur de formation de radicaux libres doté d'une température de demi-vie d'1 heure (T_{HWZ/1h}) comprise entre 50 et 200 °C à des températures de réaction comprises entre 50 °C et la température de fusion ou de ramollissement du substrat greffé pendant un temps de réaction compris entre 10 et 100 min et ensuite un produit greffé possédant une proportion comprise entre 0,1 et 10 % en masse de monomère fonctionnel greffé est employé en tant que composant utilisé, par le fait que 100 parties en masse de produit greffé en phase solide, auquel ont été mélangées entre 0,5 et 50 parties en masse d'au moins un monomère fonctionnel ou d'au moins un mélange de monomères contenant un monomère fonctionnel ainsi qu'entre 0,02 et 15 parties en masse d'au moins un initiateur de formation de radicaux libres doté d'une température de demi-vie d'1 heure (T_{HWZ/1h}) comprise entre 80 et 240 °C, sont introduites de manière continue ensemble avec 200 à 2 000 parties en masse d'un élastomère oléfinique non modifié, par l'intermédiaire de dispositifs de dosage à l'entrée d'une extrudeuse de réaction, l'extrusion réactive est mise en œuvre à des températures comprises entre 160 et 300 °C et un élastomère est déchargé en continu au niveau de l'extrémité du réacteur.

3. Procédé selon la revendication 1 ou 2, **caractérisé en ce que** des composés éthyléniquement α,β-insaturés contenant des groupes carboxyle et/ou les dérivés choisis parmi leurs anhydrides et/ou leurs monoesters ou diesters et/ou leurs monoamides ou diamides sont utilisés en tant que monomères fonctionnels.

4. Procédé selon la revendication 1 ou 2, **caractérisé en ce que** les monomères fonctionnalisés sont des composés éthyléniquement α,β-insaturés qui contiennent des groupes hydroxyle, époxy, amino, imido ou silane en tant que groupes fonctionnels.

5. Procédé selon la revendication 3, **caractérisé en ce que** de l'anhydride maléique (MSA) et/ou de l'acide acrylique (AS) est utilisé en tant que monomère fonctionnel, seul ou en mélange avec un comonomère du groupe des composés vinylaromatiques.

6. Procédé selon la revendication 3, **caractérisé en ce que** les esters de C₁₋₁₂-alkyle de l'acide acrylique ou méthacrylique sont utilisés en tant que monomères fonctionnels, seuls ou en mélange avec un comonomère du groupe des composés vinylaromatiques.

7. Procédé selon la revendication 5 ou 6, **caractérisé en ce que** des compositions de 99 à 20 % en masse de monomère fonctionnel et 1 à 80 % en masse de comonomère sont utilisées.

8. Procédé selon l'une quelconque des revendications 1 à 7, **caractérisé en ce que** le greffage initié de manière radicalaire est mis en œuvre en utilisant un agent de formation de radicaux ou un mélange constitué d'au moins deux agents de formation de radicaux différents en utilisant des peroxydes organiques dotés d'une température de demi-vie d'1 heure (T_{HWZ/1h}) comprise entre 50 et 200 °C ou d'une température de demi-vie d'1 minute (T_{HWZ/1min}) comprise entre 85 et 250 °C en une concentration comprise entre 0,001 et 5 % en masse par rapport à la quantité totale de substrat greffé.

9. Procédé selon la revendication 8, **caractérisé en ce qu'en** tant qu'agent de formation de radicaux, des peroxydicarbonates de dialkyle dotés d'une température de demi-vie d'1 heure (T_{HWZ/1h}) comprise entre 60 et 70 °C, du peroxyde de dilauroyle (DLPO) doté d'une température de demi-vie d'1 heure (T_{HWZ/1h}) de 80 °C, du peroxyde de dibenzoyle (DBPO) doté d'une température de demi-vie d'1 heure (T_{HWZ/1h}) de 91 °C, du peroxy-2-éthylhexanoate de tert-butyle (TBPEH) doté d'une température de demi-vie d'1 heure (T_{HWZ/1h}) de 91 °C, du peroxyisobutyrate de tert-butyle (TBPIB) doté d'une température de demi-vie d'1 heure (T_{HWZ/1h}) de 98 °C, du 1,1-di(tert-butylperoxy)-cyclohexane (DTBPC) doté d'une température de demi-vie d'1 heure (T_{HWZ/1h}) de 113 °C, du perbenzoate de tert-butyle (TBPB) doté d'une température de demi-vie d'1 heure (T_{HWZ/1h}) de 122 °C, du peroxyde de dicumyle (DCP) doté d'une température de demi-vie d'1 heure (T_{HWZ/1h}) de 132 °C, du 2,5-diméthyl-2,5-di(tert-butylperoxy)-hexane (DHBP) doté d'une température de demi-vie d'1 heure (T_{HWZ/1h}) de 134 °C, du 2,5-diméthyl-2,5-di(tert-butylperoxy)-hexyne-(3) (DYBP) doté d'une température de demi-vie d'1 heure (T_{HWZ/1h}) de 141 °C, du peroxyde de di-tert-butyle (TBP) doté d'une température de demi-vie d'1 heure (T_{HWZ/1h}) de 141 °C, de l'hydroperoxyde de cumène (CHP) doté d'une température de demi-vie d'1 heure (T_{HWZ/1h}) de 166 °C et de l'hydroperoxyde de tert-butyle (TBHP) doté d'une température de demi-vie d'1 heure (T_{HWZ/1h}) de 185 °C sont utilisables.

10. Procédé selon l'une quelconque des revendications 1 à 9, **caractérisé en ce qu'**au moins un additif, choisi parmi des antioxydants et/ou des stabilisateurs de traitement, des charges, des agents de renforcement, des agents ignifugeants et des agents lubrifiants ainsi que des huiles de dilution, en des concentrations habituelles pour les additifs respectifs, et au moins un composant de polymère et/ou d'élastomère en une proportion de 1 à 90 % en masse par rapport à la masse à mouler élastomère totale, sont ajoutés à l'élastomère oléfinique fonctionnalisé.

11. Procédé selon la revendication 10, **caractérisé en ce que** des antioxydants primaires à base de composés phénoliques stériquement encombrés sont ajoutés en tant que stabilisateurs de traitement, en une proportion de 0,01 à 5 parties en masse par rapport à 100 parties en masse de copolymère d'oléfines ou copolymère à blocs d'oléfines élastomère fonctionnalisé.

12. Procédé selon la revendication 10, **caractérisé en ce que** des stabilisateurs de traitement sous forme d'une combinaison à chaque fois d'au moins un antioxydant primaire et d'au moins un antioxydant secondaire sont utilisés.
